Europäisches Patentamt

European Patent Office

Office européen des brevets

(19)

(11) **EP 1 019 769 B1**

(12) **EUROPÄISCHE PATENTSCHRIFT**

(45) Veröffentlichungstag und Bekanntmachung des Hinweises auf die Patenterteilung:
**29.09.2004  Patentblatt 2004/40**

(21) Anmeldenummer: **99938354.0**

(22) Anmeldetag: **27.07.1999**

(51) Int Cl.$^7$: **G02B 21/00**

(86) Internationale Anmeldenummer:
**PCT/EP1999/005372**

(87) Internationale Veröffentlichungsnummer:
**WO 2000/007056 (10.02.2000 Gazette 2000/06)**

(54) **KONFOKALES THETA-MIKROSKOP**

CONFOCAL THETA MICROSCOPE

MICROSCOPE THETA CONFOCAL

(84) Benannte Vertragsstaaten:
**DE GB**

(30) Priorität: **30.07.1998  DE 19834279**

(43) Veröffentlichungstag der Anmeldung:
**19.07.2000  Patentblatt 2000/29**

(73) Patentinhaber: **CARL ZEISS JENA GmbH
07745 Jena (DE)**

(72) Erfinder:
 • **STELZER, Ernst, H., K.
  D-74909 Meckesheim (DE)**
 • **STEFANY, Thomas
  D-69181 Leimen (DE)**
 • **LINDEK, Steffen
  D-68723 Plankstadt (DE)**
 • **SWOGER, Jim
  D-69115 Heidelberg (DE)**

(74) Vertreter: **Hampe, Holger
  Carl Zeiss Jena GmbH,
  Patentabteilung,
  Tatzendpromenade 1a
  07745 Jena (DE)**

(56) Entgegenhaltungen:
EP-A- 0 718 656          WO-A-97/05473
WO-A-98/03892          WO-A-98/07059
DE-A- 4 323 129          DE-A- 19 529 788

• SWOGER J ET AL: "A CONFOCAL FIBER-COUPLED SINGLE-LENS THETA MICROSCOPE" REVIEW OF SCIENTIFIC INSTRUMENTS,US,AMERICAN INSTITUTE OF PHYSICS. NEW YORK, Bd. 69, Nr. 8, August 1998 (1998-08), Seite 2956-2963 XP000832276 ISSN: 0034-6748
• LINDEK S ET AL: "CONFOCAL THETA MICROSCOPE WITH THREE OBJECTIVE LENSES" REVIEW OF SCIENTIFIC INSTRUMENTS,US,AMERICAN INSTITUTE OF PHYSICS. NEW YORK, Bd. 65, Nr. 11, November 1994 (1994-11), Seite 3367-3372 XP000494638 ISSN: 0034-6748 in der Anmeldung erwähnt
• GHIGGINO K P ET AL: "FLUORESCENCE LIFETIME MEASUREMENTS USING A NOVEL FIBER-OPTIC LASER SCANNING CONFOCAL MICROSCOPE" REVIEW OF SCIENTIFIC INSTRUMENTS,US,AMERICAN INSTITUTE OF PHYSICS. NEW YORK, Bd. 63, Nr. 5, Seite 2999-3002 XP000301230 ISSN: 0034-6748
• VOLCKER M ET AL: "MIKROSKOPGESTUTZTE FLUORESZENZ-PHOTONEN-KORRELATION" TECHNISCHES MESSEN TM,DE,R.OLDENBOURG VERLAG. MUNCHEN, Bd. 63, Nr. 4, Seite 128-135 XP000584186 ISSN: 0171-8096

**Beschreibung**

In der Lichtmikroskopie wird die Auflösung durch die Ausdehnung der Punktbildfunktion (engl. Point Spread Function, PSF) definiert, die eine mathematische Beschreibung der Verteilung der elektromagnetischen Energie im Bereich des Brennpunkts darstellt. Je geringer die Ausdehnung der PSF eines Mikroskopobjektivs, desto feiner die Darstellung einzelner Punkte und desto besser daher die Auflösung des Mikroskops. Die Auflösung entlang der optischen Achse, die bei allen herkömmlichen Mikroskopen schlechter als die in der Brennebene ist, wird durch eine konfokale Anordnung verbessert [M. Minsky, Microscopy apparatus, US Patent Nr. 3013567]. Dennoch ist die laterale Auflösung auch bei einem konfokalen Mikroskop im allgemeinen mindestens 3x besser als die axiale Auflösung. Aus der wissenschaftlichen Literatur ist bekannt, daß eine weitere Verbesserung der Auflösung beispielsweise durch Verringerung der Wellenlänge [C.J. Cogswell und K.G. Larkin, Handbook of Biological Confocal Microscopy, 2. Ausgabe, J. P. Pawley, Ed., S. 128 (Plenum Press, New York, 1995)], durch Vergrößerung der Apertur des Systems [S.W. Hell, S. Lindek und E.H.K. Stelzer, J. Mod. Opt., **41,** 674 (1994); S.W. Hell, E.H.K. Stelzer, S. Lindek und C.Cremer, Opt. Lett., **19,** 222 (1994)] oder durch Beobachtung der Probe unter einem Winkel zur Beleuchtungsachse [E.H.K. Stelzer und S. Lindek, Optics Comm., **111,** 536 (1994)] erreicht werden kann.

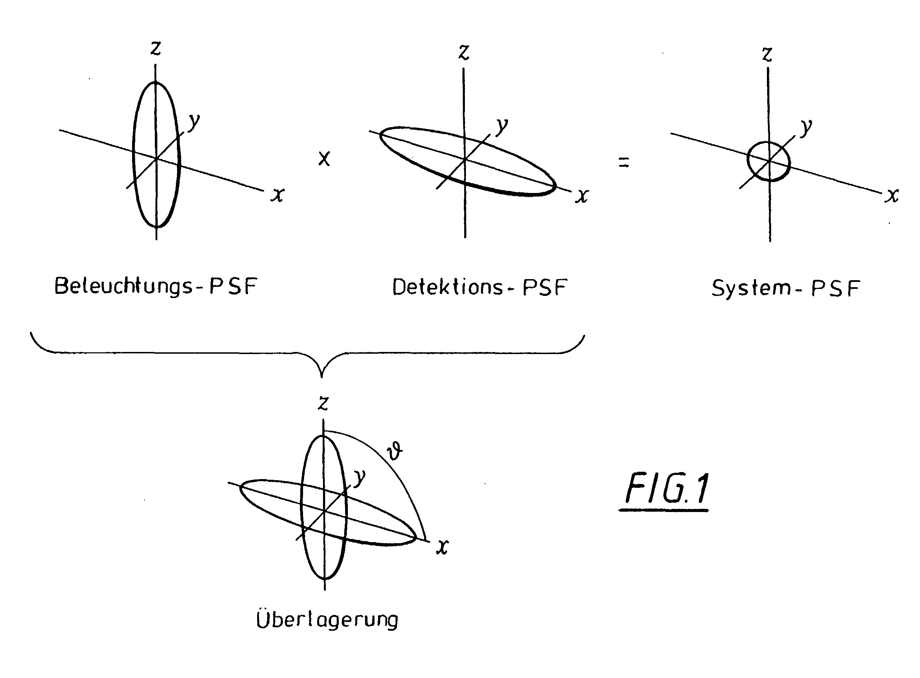

Aus der DE 43 26 473 C2 ist ein konfokales Mikroskop bekannt, das dadurch gekennzeichnet ist, daß es ein erstes Objektiv zur beugungsbegrenzten Punktbeleuchtung und ein zweites Objektiv zur konfokalen Abbildung des Objektlichts auf einen Punktdetektor verwendet, wobei die Detektionsrichtung relativ zu der Beleuchtungsrichtung um einen Winkel geneigt ist, der derart gewählt ist, daß der Überlagerungsbereich des Beleuchtungsvolumens mit dem Detektionsvolumen gegenüber einem konventionellen konfokalen Mikroskop verringert ist. Dieses als konfokales Theta-Mikroskop bezeichnete Mikroskop bedient sich also der letzteren Methode für die Verbesserung der Auflösung und schafft eine fast isotrope Auflösung. Abbildung 1 stellt ein solches konfokales Theta-Mikroskop mit dem Winkel $\vartheta$ ungleich 0 zwischen den Achsen zur Beleuchtung der Probe und zur Detektion des emittierten Lichtes dar. Die Beleuchtung erfolgt entlang der z-Achse, und die daraus resultierende PSF ist in dieser Richtung ausgedehnt. In derselben Art und Weise ist die Detektions-PSF entlang der x-Achse ausgedehnt. Beide PSFs überlagern sich im Bereich des gemeinsamen Brennpunkts. Nur in diesem Überlagerungsbereich werden Punkte beleuchtet und ihre Emission detektiert. Beträgt der Winkel $\vartheta$ zwischen der Beleuchtungs- und der Detektionsachse 90°, ist der Überlagerungsbereichs fast sphärisch, was bedeutet, daß die Auflösung in alle drei Raumrichtungen vergleichbar ist. Die Ausdehnung der gesamten PSF, die aus dem Produkt der Beleuchtungs- und Detektions-PSFs besteht, reduziert sich auf ein Minimum, was gleichbedeutend mit einer verbesserten Auflösung des Mikroskops ist.

Aus der DE 43 26 473 C2 ist ebenfalls bekannt, daß zur Verbesserung der Auflösung die konfokale Theta-Mikroskopie auch mit der aus der DE-OS 40 40 441 bekannten doppelkonfokalen Mikroskopie, die in Literatur auch als 4Pi-konfokale Mikroskopie bezeichnet wird, kombinert werden kann. Die 4Pi-konfokale Mikroskopie vergrößert die numerische Apertur eines konfokalen Mikroskops und verbessert damit die axiale Auflösung [S. Hell und E.H.K. stelzer, J. Opt. Soc, Am. A., 9, 2159 (1992)]. Bei der in der wissenschaftlichen Literatur als 4Pi(A)-konfokale Mikroskopie bezeichneten Technik wird die Probe kohärent von zwei sich entgegengesetzt ausbreitenden konvergenten Strahlen beleuchtet. Die Interferenz dieser beiden Strahlen verringert die Halbwertsbreite des Hauptmaximums der Beleuchtungs-PSF. Bei der als 4Pi(B)-konfokale Mikroskopie bezeichneten Technik entsteht die Interferenz an der Detektionsblende und reduziert so die Ausdehnung der Detektions-PSF. Die 4Pi(C)-konfokale Mikroskopie genannte Methode kombiniert diese beiden Techniken.

Bei der Kombination der aus der DE 43 26 473 C2 bekannten konfokale Theta-Mikroskopie und der aus der DE-OS 40 40 441 bekannten 4Pi-konfokalen Mikroskopie wird die Probe wie in einem 4Pi(A)-konfokalen Mikroskop beleuchtet und das emittierte Licht wie in einem konfokalen Theta-Mikroskop orthogonal detektiert, so daß die axialen Nebenmaxima der PSF unterdrückt werden. Das bedeutet, daß die Emission außerhalb der Brennebene bei 4Pi-Beleuchtung nicht detektiert wird.

Herkömmlicherweise wird die konfokale Theta-Mikroskopie so realisiert, daß zwei (oder mehr) Objektivlinsen unter einem Winkel $\vartheta$ angeordnet werden [S. Lindek, R. Pick und E.H.K. Stelzer, Rev. Sci. Instrum., **65,** 3367 (1994)]. Obwohl dies die naheliegende Anordnung für die Theta-Mikroskopie ist, erfordert sie getrennte Strahlengänge für Beleuchtung und Detektion und deshalb die in etwa doppelte Anzahl optischer Komponenten.

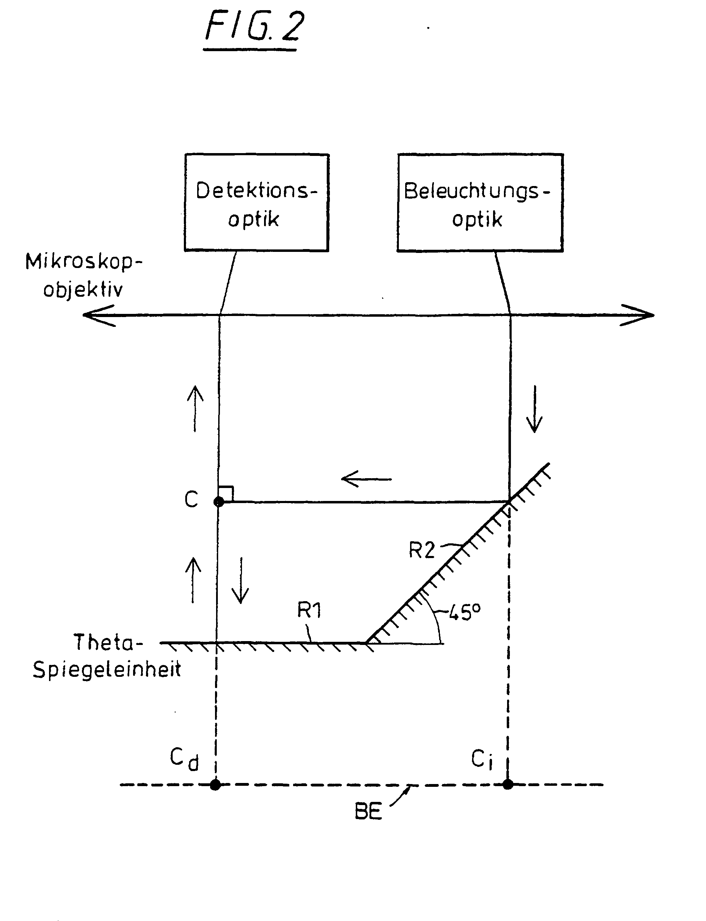

Aus der DE-OS 196 32 040 A1 bzw. der WO 98/07059 ist bekannt, daß das Prinzip der konfokalen Theta-Mikroskopie auch mit einem einzigen Mikroskopobjektiv realisiert werden kann. Ein solches als Einzelobjektiv Theta-Mikroskop (engl. Single-Lens Theta Microscope, SLTM) bezeichnetes Gerät vermeidet die Komplexität, die mit Doppelobjektivsystemen verbunden ist, wie sie aus der DE 43 26 473 C2 sowie aus der DE-OS 196 29 725 A1 bzw. der WO 98/03892 bekannt sind. Abbildung 2 stellt die Wirkungsweise eines solchen SLTMs dar. Die Kombination einer Objektivlinse und einer als Theta-Spiegeleinheit bezeichneten Strahlumlenkeinheit zwischen dem Objektiv des Mikroskops und seiner Brennebene BE erlaubt die Abbildung der Probe aus verschiedenen Winkeln. Das Beleuchtungslicht passiert hierbei die Objektivlinse und bildet den virtuellen Brennpunkt $C_i$ unter dem 45°-Spiegel. Die Reflektion an der Spiegeloberfläche des 45°-Spiegels leitet das Licht horizontal zum Brennpunkt C, der sich innerhalb des zu beobachtenden Objektes befindet. Im Gegensatz dazu sammelt die Detektionsoptik nur das Licht des virtuellen Bildes $C_d$, das vom horizontalen Spiegel gebildet wird. Daher ist die Detektionachse vertikal, und die Beleuchtungs- und Detektionsachsen schließen somit einen Winkel von 90° ein. Die Ausrichtung der beiden Spiegeloberflächen wird so gewählt, daß die Bilder $C_i$ und $C_d$ von C in der Brennebene des Objektives liegen und konfokal in die Beleuchtungs- und Detektionsoptik abgebildet werden.

Der Strahlengang in einem herkömmlichen konfokalen Mikroskop muß verändert werden, um es als SLTM betreiben zu können. Diese Veränderungen sind vorzugsweise so vorzunehmen, daß das Mikroskop weiterhin auch im herkömmlichen konfokalen Modus betrieben werden kann. Insbesondere für eine 4Pi-Beleuchtung ist eine spezielle Veränderung der Beleuchtungsvorrichtung notwendig.

Durch die vorliegende Erfindung wird ein Weg aufgezeigt, wie die Veränderungen an einem herkömmlichen konfokalen Mikroskop vorgenommen werden können. Hierzu wird erfindungsgemäß entsprechend der in Anspruch 1 definierten Merkmale vorgeschlagen, daß das Licht mit Hilfe eines zwischen Objektiv und einer Bildebene des Mikroskops befindlichen Strahlteilers oder Reflektors ein- und/oder ausgekoppelt wird und/oder daß die Ein- und/oder Auskopplung über Lichtleitfasern erfolgt.

Ein Ausführungsbeispiel der vorliegenden Erfindung wird nachstehend unter Bezugnahme auf die Abbildungen näher erläutert.

Eine bevorzugte Ausführungsform des erfindungsgemäßen Mikroskops basiert auf einem Zeiss Axioplan Universalmikroskop (Modell 1), in dem der Reflektorschieber (zwischen Tubus und Objektivlinsen des Mikroskops angebracht) so modifiziert wurde, daß das Ein- und Auskoppeln des Lichtes bei dem Gerät mittels einer oder mehrerer Lichtleitfasern möglich ist. Trotz zusätzlicher externer Teile wird lediglich der Schieber modifiziert, so daß die Originalfunktion des Axioplan erhalten bleibt. Die mit diesem System möglichen Mikroskopiearten sind die folgenden: 1) traditionelle Weitfeldmikroskopie, 2) konfokale Laserscanningmikroskopie (LSM) (durch Systemmodifizierungen, die hier nicht beschrieben werden) 3) konfokale Theta-Mikroskopie und 4) 4Pi-konfokale Theta-Mikroskopie. Bei den Theta-Mikroskopien wird Objektscanning angewendet, um räumlich ausgedehnte Strukturen darzustellen.

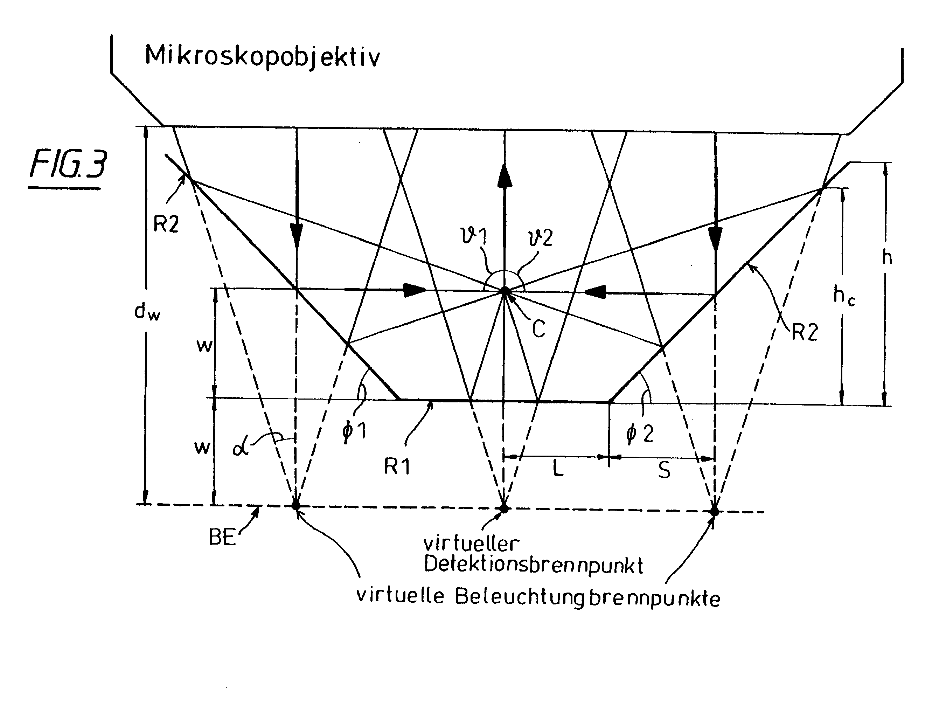

Abbildung 3 zeigt das Objektiv, die Theta-Spiegeleinheit und die Beleuchtungs- und Detektionsstrahlengänge des SLTMs. Eine einzelne Objektivlinse fokussiert das Beleuchtungs- und Detektionslicht auf drei Punkte in der virtuellen Bildebene. Dieses System unterscheidet sich von der Ausführungsform in Abbildung 2 dahingehend, daß die Theta-Spiegeleinheit aus drei Abschnitten besteht: einem horizontalen Spiegel R1 und zwei geneigten Spiegeln R2 in den Winkeln $\phi_1$ and $\phi_2$ zur Horizontalen. Dadurch wird die Probe optimal aus drei verschiedenen Richtungen zugänglich. Die beiden äußeren Strahlengänge werden für die Beleuchtung verwendet, so daß eine 4Pi-Beleuchtung erreicht werden kann, und der mittlere Strahlengang wird für die Beobachtung der Probe verwendet.

Vorzugsweise werden die Winkel der Spiegelkomponenten so gewählt, daß $\phi_1 = \phi_2 = 45°$ und $\vartheta_1 = \vartheta_2 = 90°$. Das bedeutet: 1) die Detektion befindet sich senkrecht zur Beleuchtung (woraus ein Überlagerungsbereich der Beleuchtungs- und Detektions-PSFs mit fast sphärischer Symmetrie resultiert) und 2) die Beleuchtungsstrahlen bei 4Pi-Beleuchtung sind gegenläufig (Minimierung des Abstandes zwischen den Interferenzknotenpunkten in der Region des Brennpunktes $C$). Im Folgenden wird daher das symmetrische System mit $\phi_1 = \phi_2 = \phi = 45°$ betrachtet.

Für das SLTM müssen eine Objektivlinse und die Abmessungen der Theta-Spiegeleinheit ausgewählt werden. In Abbildung 3 werden der Arbeitsabstand $d_w$ und der maximale Öffnungswinkel $\alpha$ durch das Objektiv bestimmt. Der Winkel $\alpha$ wird wie folgt definiert:

$$\alpha = \sin^{-1}(NA/n_r).$$

$NA$ ist die numerische Apertur des Objektivs, und $n_r$ ist der Brechungsindex des Immersionsmediums. Idealerweise sind sowohl $d_w$ als auch $\alpha$ so groß wie möglich, aber bei handelsüblichen Objektiven verringert sich der Arbeitsabstand in vielen Fällen mit der numerischen Apertur. Unter Berücksichtigung der beabsichtigten Nutzung des Systems durch den Anmelder (z.B. als Fluoreszenzmikroskop für biologische Proben), wurde ein 63x Zeiss Achroplan Wasserimmersionsobjektiv (Carl Zeiss Jena, Deutschland) mit $d_w = 1{,}46$ mm und $NA = 0{,}9$ ausgewählt, mit dem ein Öffnungswinkel von $\alpha = 42{,}6°$ in Wasser erreicht wird.

Zur vollständigen Spezifizierung der Theta-Spiegeleinheit müssen die folgenden Parameter festgelegt werden: der Abstand $w$ des horizontalen Spiegels von der Brennebene BE; der Abstand $L$ von der Mitte der Spiegeleinheit bis zur inneren Kante des 45°-Spiegels; der horizontale Abstand s von der inneren Kante des 45°-Spiegels bis zur Zentralachse des Beleuchtungsstrahlengangs und die Spiegelhöhe $h$. Mit der Vorgabe von $\phi = 45°$ ist in Abbildung 3

$$L = s = w.$$

Daher müssen lediglich $L$ und $h$ bestimmt werden, um die Gestalt der benötigten Theta-Spiegeleinheit zu bestimmen.

Die Höhe der Theta-Spiegeleinheit ist dahingehend begrenzt, daß sie geringer sein muß als der Arbeitsabstand des Objektivs, d.h. $h < h_{max} = d_w$ - L. Bei einem Wert von $h$ = 1,0 mm für die Spiegelhöhe, der geringer ist als der Arbeitsabstand $d_w$ =1,46 mm, bleibt somit etwas Raum zwischen dem Objektiv und der Oberkante der Theta-Spiegeleinheit.

Der Parameter $L$ steht für den kürzesten Abstand zwischen der Theta-Spiegeleinheit und dem Brennpunkt $C$ und stellt die größte Entfernung dar, um die ein Objekt in dem System vertikal gescannt werden kann.

Obwohl ein großer Wert für $L$ vorteilhaft ist, gibt es außer $d_w$ noch zwei weitere Faktoren, die $L$ in der Praxis limitieren. Wenn das gesamte einfallende Licht den Brennpunkt $C$ erreichen soll, müssen beide virtuellen Beleuchtungsbrennpunkte in der Brennebene im Sichtfeld des Objektivs liegen. Ist der Abstand zwischen den virtuellen Beleuchtungsbrennpunkten in der Objektebene gleich $4L$, so beträgt deren Abstand in der Bildebene $4M_{obj}L$, wobei $M_{obj}$ die Vergrößerung des Objektivs darstellt (siehe Abbildung 3). Damit das Mikroskop die beiden Brennpunkte gleichzeitig darstellen kann, muß also der Abstand der beiden Brennpunkte geringer sein als der Felddurchmesser $\phi_f$, so daß

$$L < \phi_f / 4M_{obj}$$

Für das ausgewählte Objektiv betragen $\phi_f$ = 20 mm und $M_{obj}$ = 63, so daß $L < 79$ μm bei 4Pi-Beleuchtung in diesem System.

Der andere Faktor, der die Auswahl von $L$ beeinflußt, ist $h_c$, die maximale Höhe, bei welcher der äußere Lichtkegel auf die Oberfläche des 45°-Spiegels trifft (siehe Abbildung 3). Im allgemeinen ist $h_c$ zu $L$ proportional; insbesondere ist $h_c$ etwa 1,9 mm in diesem System. Es sollte klar sein, daß bei $h_c > h$ nicht der gesamte Lichtkegel zum Brennpunkt $C$ abgelenkt wird und ein Teil der optischen Energie verloren geht. Unter bestimmten Umständen kann sich dieser Verlust zwar auf die Leistung des Mikroskops auswirken, aber im dargelegten Fall bewirkt $L < 79$ μm einen Leistungsverlust von weniger als 0.8%, so daß $L$ = 75 μm eine vorteilhafte Wahl für dieses System ist.

Die Ausgänge der zwei polarisationserhaltenden Lichtleitfasern (PP-Fasern) werden so plaziert, daß das Laserlicht über die äußeren Strahlengänge auf das Beobachtungsobjekt gerichtet werden kann (siehe Abbildung 3). Eine Multimode-Lichtleitfaser (MM-Faser) befindet sich im zentralen Strahlengang und sammelt das Streu- oder Fluoreszenzlicht des Beobachtungsobjektes.

Um diese Anordnung verwirklichen zu können, wurde der Standard-Spiegelschieber eines Axioplan Mikroskops modifiziert, der sich zwischen Objektiv und Tubuslinse befindet. Er wurde vorteilhafterweise so verändert, daß eine seiner vier Öffnungen für das SLTM genutzt wird. Es kann sich hier auch um einen anderen Schieber handeln. Bei anderen Mikroskopmodellen besteht auch die Möglichkeit, die Lichtleitfasern an dem Mikroskopstativ zu befestigen.

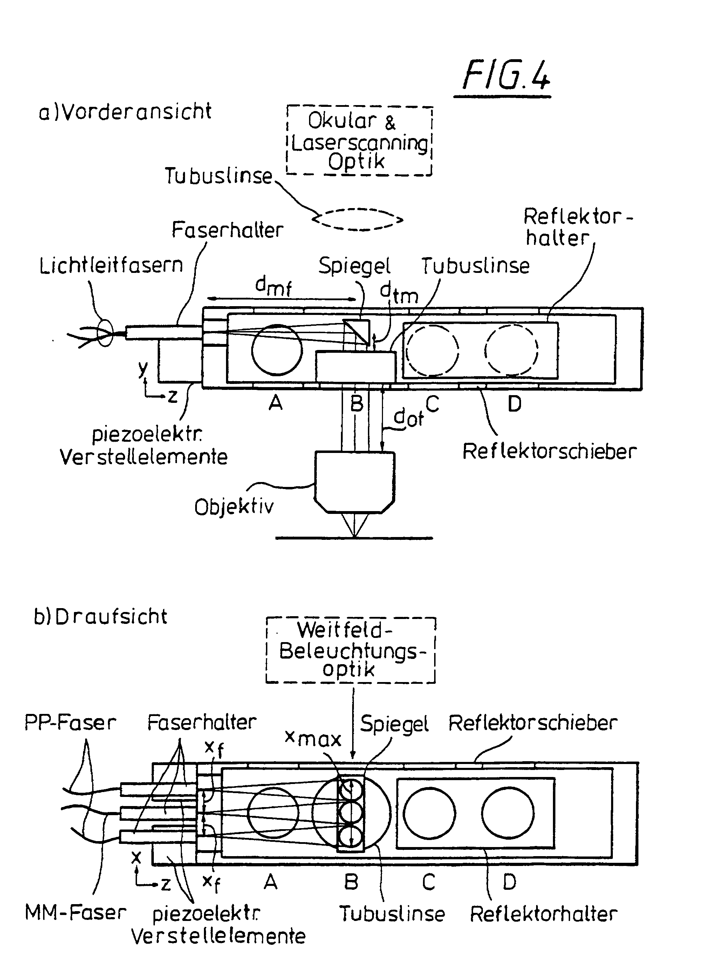

Abbildung 4 zeigt eine schematische Darstellung des Spiegelschiebers und der angrenzenden Optik. Der Schieber und die damit verbundenen Bauteile werden in der Vorderansicht und in der Draufsicht dargestellt. Bei der Standardkonfiguration des Axioplan fällt das vom Beobachtungsobjekt kommende Licht durch eines der vier Löcher (A-D) in den Schieber, der seitlich zwischen das Objektiv und die Standard-Tubuslinse bewegt werden kann. Danach fällt es entweder durch den oberen Teil in das Okular oder durch die hintere Blende in die Detektionsoptik. Die Positionen C und D funktionieren in dem veränderten System weiter nach dem eben erwähnten Prinzip. B wird für den Anschluß der Lichtleitfasern genutzt und A bleibt leer, um den Strahlengang zu den Lichtleitfasern nicht zu blockieren. Diese leere Position wird im konfokalen LSM Modus des Systems genutzt, bei dem das Licht über den Videoport aus dem Axioplan ein- bzw. ausgekoppelt wird.

Die Kombination der Objektivlinse und die an Position B des Schiebers vorgenommenen Veränderungen führen vorzugsweise zu einem telezentrischen Abbildungssystem. Dieses ist so aufgebaut, daß es das Licht von den virtuellen Brennpunkten in der Objektivbrennebene sammelt und deren vergrößerte Bilder auf die Lichtleitfasern in der Bildebene projiziert.

Die Brennweite der Standard-Tubuslinse des Axioplan ($f_{t,standard}$ = 164,5 mm) und ihr Abstand zur Objektivbasis (100,5 mm) zeigen, daß sich die hintere Brennebene des Objektivs 64 mm unter dem Anschlag des Objektivs befindet. Unter dieser Voraussetzung und der Tatsache, daß der Abstand vom Anschlag des Objektivs zur Tubuslinse $d_{ot}$ 36,3 mm beträgt, muß die Brennweite der neuen Tubuslinse 100,3 mm betragen, um die Anordnung, wie in Abbildung 4 dargestellt, telezentrisch zu gestalten.

Unter Berücksichtigung der Limitierung von Aberrationen wurde eine Melles Griot Dapromat Hybridlinse als Tubuslinse ausgewählt, die eine Brennweite $f_t$ = 100 mm und einen Durchmesser von 26,5 mm hat. Mit diesen Parametern konnten die Position und die Größe der Brennpunktabbildungen bestimmt werden, die an die Lichtleitfasern angepaßt werden mußten.

Die Position der Bildebene, die durch den Abstand der Tubuslinse von dem Spiegel $d_{tm}$ und den Abstand des Spiegels von der Faser $d_{mf}$ in Abbildung 4 definiert wird, wird durch das Verhältnis $d_{tm} + d_{mf} = f_t$ bestimmt. Um die Komponenten in den Spiegelschieber zu integrieren, wurde $d_{tm}$ mit 4,6 mm festgelegt, so daß $d_{mf}$ 95,4 mm beträgt.

Die Brennweite $f_o$ des Axioplan beträgt für jegliches Beobachtungsobjekt:

$$f_o = f_{t,standard} \, / \, M_{obj}$$

Bei dem hier verwendeten 63x Objektiv ergibt sich eine Brennweite von 2,61 mm. Die effektive Vergrößerung des modifizierten Systems beträgt daher $M_{sys}$ = 38,3.

Da der Abstand zwischen den virtuellen Brennpunkten in Abbildung 3 2$L$ = 150 µm beträgt, müssen die Lichtleitfasern mit $x_f$ = 5,57 mm positioniert werden, um sie an den konfokalen Punkten des Systems zu haben.

Die maximale räumliche Ausdehnung liegt zwischen den optischen Strahlen ($x_{max}$ in Abbildung 4) an der Tubuslinse und beträgt $x_{max}$ = 16,3 mm. Da dieser Wert kleiner als der optische Durchmesser der Tubuslinse (23,9 mm) ist, wird die Apertur im optischen Strahlengang nicht durch die Tubuslinse begrenzt.

Die Beleuchtungslichtleitfasern für diese Arbeit sind beispielsweise Panda-Typ PP-Lichtleiter (#WT-01-PGA-213-70C-005, WaveOptics Inc., Mountain View, CA, USA) mit einem Felddurchmesser von 3,5 µm, einer Grenzwellenlänge von weniger als 470 nm und $NA_{pp}$ von 0,11. Diese numerische Apertur erzielt eine maximale Strahlenbreite von 22 mm, die beträchtlich größer ist als die Objektivapertur $\phi_{obj}$ = 4,8 mm. Daher ist das Objektiv überbeleuchtet, so daß angenommen werden kann, daß das Feld über die gesamte hintere Brennebene homogen ist.

Für die vorliegenden Berechnungen wird die PSF als beugungsbegrenzt behandelt. Das bedeutet, daß der Durchmesser ungefähr:

$$\phi_{image} = M_{sys} \; 1.22 \; \lambda \, / \, NA_{obj}$$

beträgt, wobei $\lambda$ die Wellenlänge des Lichts ist. Unter Annahme einer durchschnittlichen Wellenlänge von -525 nm, erhält man einen Bilddurchmesser von $\phi_{image}$ = 27,6 µm, der die optimale Größe der Detektionslochblende des Systems definiert. Um eine zusätzliche Lochblende zu vermeiden, wurde als Detektionslichtleitfaser eine Quartz-MM-Lichtleitfaser ($NA_{mm}$ = 0,22, 230 nm < $\lambda$ < 1100 nm, 25 µm Kern, BTO Bungert GmbH, Weil der Stadt, Deutschland) mit einem Faserkerndurchmesser ausgesucht, der an $\phi_{image}$ angepaßt ist. Da die numerische Apertur dieser Faser $NA_{mm}$ größer als die der Tubuslinse, ist die Lichtleiterfaser in der Lage, alles Licht zu sammeln, das für die Detektion zur Verfügung steht.

Die exakte Positionierung der drei Fasern in der Bildebene der Tubuslinse ist für den erfolgreichen Betrieb des SLTMs von Bedeutung. Die Fasern müssen immer präzise zueinander und zur Theta-Spiegeleinrichtung angeordnet sein. Vorteilhafterweise wird die MM-Lichtleitfaser direkt am modifizierten Spiegelschieber befestigt, so daß sie als fester Referenzpunkt dient.

Die Theta-Spiegeleinrichtung kann dann anhand dieses Referenzpunktes positioniert werden, indem man die Steuerelemente für die *xyz*-Positionierung am Objekttisch des Mikroskops bedient, auf dem sie ruht.

Wie in Abbildung 4 angegeben, werden die PP-Lichtleitfasern vorteilhafterweise auf translatorischen Verstellelementen befestigt. In dem angeführten Ausführungsbeispiel sind die Fasern auf drei-achsigen piezoelektrischen Positionshaltern (Minitritor 3D MIN 38 NV, Piezsystem Jena GmbH, Jena, Deutschland) befestigt, die eine Bewegung von 38 µm in jede Richtung zulassen. Diese gestatten, die Beleuchtungsfasern räumlich, relativ zu der MM-Faser mit Nanometer-Genauigkeit zu positionieren. Eine grobe Justierung aller drei Fasern kann mit Hilfe der Schrauben, welche die Fasern am Spiegelschieber fixieren, vorgenommen werden.

Um eine optimale Leistung bei der 4Pi-konfokalen Theta-Mikroskopie zu erzielen, ist es wichtig, daß das zentrale Maximum der Beleuchtungs-PSF mit dem Maximum der Detektions-PSF übereinstimmt. Die dazu notwendige Phasensteuerung wird durch Justierung der axialen Position einer oder beider PP-Fasern mit translatorischen Verstellelementen, beispielsweise piezoelektrischen Stellgliedern, realisiert.

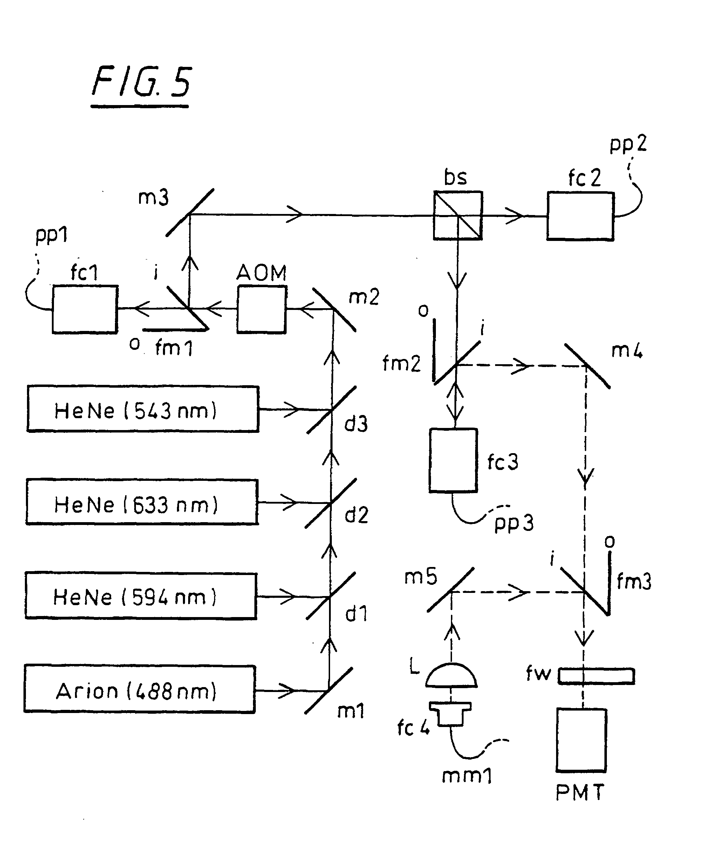

Abbildung 5 zeigt ein schematisches Diagramm der Beleuchtungs- und Detektionselemente des SLTMs, die sich außerhalb des Axio- plan Mikroskops befinden. Die Richtung der Lichtausbreitung wird von den Pfeilen angegeben. Die Beleuchtungsstrahlengänge werden mit durchgängigen Linien dargestellt, die der Detektion durch gestrichelte Linien. Bei den Lasern handelt es sich um einen Argon-Ionen Laser (Modell 2014, Uniphase Vertriebs GmbH, Eching, Deutschland), der eine Linie bei 488 nm liefert, und drei HeNe Laser (Modelle LHRP-1701, LHYP-0101, LHGP.0101, Research Electro-Optics, Inc., Boulder, Colorado, USA) für Wellenlängen von 633, 594 bzw. 543 nm. Die gesamte Anordnung ist auf einem vibrationsisolierten optischen Tisch angebracht.

Das Licht der vier Laser wird über die dichroitischen Spiegel dl-d3 zu einem einzigen Strahl gebündelt, der dann in den AOM (Akusto-Optischer Modulator: AA.AOTF.4C-T und AA.MOD.4C.230 VAC, A.A. Opto-Electronic, St.-Rémy-les-Chevreuse, Frankreich) geleitet wird. Dieser ist in der Lage, die Energie von mehr als 6 Wellenlängen zu modulieren, so daß die Energie von jeder einzelnen Wellenlänge des Beleuchtungsstrahls gesteuert werden kann.

Der aus dem AOM kommende Lichtstrahl kann entweder direkt in den ersten Faserkoppler fc1 gespeist werden oder durch einen Kippspiegel (Owis GmbH, Staufen i. Br., Deutschland) fm1 und den Spiegel m3 zum Strahlenteiler umgeleitet werden. Für Arbeiten im konfokalen Laserscanning Modus koppelt fc1 das Licht in die PP-Faser ppl.

Bei (4Pi-)konfokaler Theta-Mikroskopie wird fm1 in den Strahlengang gebracht und der aus dem AOM kommende Lichtstrahl wird zum 50:50 nicht-polarisierenden Strahlenteiler bs (Breitband Hybrid kubischer Strahlenteiler 03 BSC 005, Melles Griot GmbH, Bensheim, Deutschland) geleitet. Die Teilstrahlen werden über fc2 und fc3 in die Fasern pp2 und pp3 gekoppelt (mit fm2 OUT). Diese werden als Beleuchtungsquellen für die (4Pi-)konfokale Theta-Mikroskopie verwendet

Die MM-Faser mml wird mit fm3 IN verwendet, um das emittierte Licht aus dem Axioplan im konfokalen Theta-Modus auszukoppeln. Das aus dieser Faser (die am Trennadapter fc4 endet) austretende Licht wird durch die Linse L gesammelt (f/1, 25 mm Durchmesser, plan-konvex, anti-reflexionsbeschichtet für sichtbares Licht) und durch die Spiegel m5 und fm3 (Position EIN) zum Filterrad fw umgeleitet, das nur die relevanten Emissionssignale durchläßt. Das durch diesen Filter dringende Licht wird von dem PMT (Photosensor Modul H5702-50, Hamamatsu Photonics Deutschland GmbH, Herrsching, Deutschland) aufgenommen.

Das vorliegende System im Laserscan-Modus zu nutzen, erfordert, daß sich fm1 in OUT-Position befindet, so daß das Laserlicht über pp1 auf das Beobachtungsobjekt übertragen wird.

Im konfokalen Theta-Modus des Systems müssen sich fm1, fm2 und fm3 in der IN-Position befinden. Dadurch ist es möglich, daß das Licht in pp2 eingekoppelt wird und das Signal von mml aufgenommen wird. Mit fm2 IN und fm3 OUT kann das Licht auch aus pp3 in den PMT geleitet werden.

Die Konfiguration für die 4Pi-konfokale Theta-Mikroskopie ist ähnlich angelegt, außer daß fm2 sich in OUT-Position befindet, so daß sowohl pp2 als auch pp3 als Beleuchtungsquellen genutzt werden können. Die Laserscan- und Detektionsoptik wird bei der SLTM Konfiguration nicht genutzt.

Die Probe wird durch eine Kapillare gehalten, die auf einem Präzisions-Scan-Tisch (Modell P-762.00, Physik Instrumente, Waldbronn, Deutschland) befestigt ist, der eine Bewegungsspanne von mehreren Millimetern hat und in allen drei Richtungen über einen Bereich von 20 μm mit einer Genauigkeit von besser als 40 nm gescannt werden kann. Die Kapillare wird horizontal ausgerichtet und zwischen die Objektivlinse und die Theta-Spiegeleinheit eingesetzt, um das Objekt in der Position C (siehe Abbildung 3) zu halten. Vorzugsweise wird die Kapillare gedreht, so daß sich das Beobachtungsobjekt unter ihr befindet und sie den Strahlengang nur minimal blockiert.

Das Theta-Mikroskop wird von einem IBM PC-kompatiblen Computer gesteuert, der Karten zur Steuerung der Schrittmotoren im Filterrad, die DA-Wandler (PCI-20098C, Burr-Brown/Intelligent Instrumentation, Tucson, USA), die den Objekttisch antreiben sowie die Verstärkungsregelung für den das PMT, enthält. AD-Wandler (PCI-20098C, Burr-Brown/Intelligent Instrumentation, Tucson, USA) werden verwendet, um die vom PMT empfangene Lichtintensität aufzuzeichnen. Die Antriebe der Kippspiegel und der Piezo-Stellelemente für die Fasern können über den Computer gesteuert werden, können aber auch nicht mit dem Computer verbunden sein und manuell über die entsprechenden Antriebseinheiten (PS1612 Stromversorgung, Monacor und E-101-01 Piezo-Stellelemente Stromversorgung, Piezosystem Jena GmbH) gesteuert werden.

Ein in Visual Basic (Microsoft Corp., Redmont, USA) geschriebenes Programm verwaltet die Datengewinnung. In diesem Prozess generiert der Computer drei Werte für eine *xyz*-Adresse, die das Beobachtungsobjekt relativ zum Objektiv und der Theta-Spiegeleinheit positioniert. Die Positionierung wird über ein elektronisches Bauteil (Modell P-925.272, PI Physik Instrumente, Waldbronn, Deutschland) gesteuert, das in einem geschlossenen Regelkreis arbeitet. Die Intensität des vom Beobachtungsobjekt emittierten Lichtes wird über einen PMT als Funktion der Fokusposition im Objekt gemessen.

Die vorab beschriebene Anordnung gestattet mehrere Mikroskopiemethoden:

1) Die herkömmliche Weitfeld-Reflexions- und -Transmissionsmikroskopie ist mit dem in seinem Aufbau unveränderten Axioplan möglich. Das Beobachtungsobjekt kann entweder mit einer Quecksilberdampflampe für Reflexion oder Fluoreszenz von oben oder mit einer Halogenlampe für Transmission von unten beleuchtet werden.

2) Konfokale Laserscanning Mikroskopie kann durchgeführt werden. In diesem Fall teilen sich Beleuchtungs- und Detektionslicht den gleichen Strahlengang durch die Objektivlinse und die jeweilige Spiegelanordnung. Das Beleuchtungslicht wird durch Lichtleitfasern zur Verfügung gestellt (pp1 in Abbildung 5), und das Fluoreszenzlicht fällt durch Filter in Detektoren, die hier nicht näher beschrieben werden.

3) SLTM ist möglich bei Anwendung der hier beschriebenen Modifizierungen am Axioplan.

Das System kann auch als 4Pi-konfokales Theta-Mikroskop betrieben werden. Dieser Modus ist der SLTM-Konfiguration sehr ähnlich, mit der Ausnahme, daß das Beobachtungsobjekt kohärent von mindestens zwei Seiten beleuchtet wird. Das Interferenzmuster, das von diesen beiden sich entgegengesetzt ausbreitenden Strahlen gestaltet wird, verringert die Größe der Beleuchtungs-PSF und verbessert so die Auflösung des Systems.

Die Kombination aller Methoden in einem Gerät erlaubt es dem Nutzer zwischen den verschiedenen Betriebsarten hin- und herzuschalten und die für seine Untersuchung am besten geeignete Methode auszuwählen. Beispielsweise kann die Erstbeobachtung eines Objektes mit der Weitfeld- oder der konfokalen Laserscanning Methode durchgeführt werden. Da sich die Komplexität der Justierung mit zunehmender Sensitivität der Methode erhöht, muß der Nutzer nur den einfachsten Mikroskopiermodus anwenden, der die interessierenden Eigenschaften darstellen kann.

Das Design des vorliegenden Instrumentes ist der biologischen Forschung angepaßt. Die Verwendung von Wasser als Immersionsmedium gestattet es, biologische Proben in ihrer natürlichen Umgebung zu beobachten. Der kürzere freie Arbeitsabstand im Vergleich zur konfokalen Theta-Mikroskopie mit zwei Objektivlinsen bedeutet, daß die Proben nicht so groß wie dort sein dürfen. Als Werkzeug für die zelluläre und subzelluläre biologische Forschung ist das SLTM daher von allergrößter Bedeutung. Die Verwendung von Wasserimmersionsobjektiven hat auch den Vorteil, daß Aberrationen aufgrund unterschiedlicher Brechungsindizes minimiert werden.

Die bestmögliche Auflösung liegt bei ca. 100 nm im 4Pi-konfokalen Theta-Modus verglichen mit 200-350 nm bei der konfokalen Theta-Mikroskopie und ca. 1400 nm im konfokalen Laserscanning-Modus.

**Bezugszeichenliste**

**Abb. 2:**

| $C$ | Brennpunkt |
|---|---|
| $C_d$ | virtueller Detektionsbrennpunkt |
| $C_i$ | virtueller Beleuchtungsbrennpunkt |
| $R1$ | horizontaler Reflektor |
| $R2$ | schräger Reflektor |

**Abb. 3:**

| $\alpha$ | halber Öffnungswinkel des fokussierten Strahls |
|---|---|
| $\phi_i$ | Neigungswinkel des Spiegels |
| $\vartheta_i$ | Winkel Theta |
| $h$ | Höhe der Theta-Spiegeleinheit |
| $h_c$ | kritische Spiegelhöhe |
| $L$ | horizontaler Abstand der Basis des schrägen Spiegels von der Mittelachse |
| $s$ | horizontaler Abstand des Beleuchtungsbrennpunkts von der Basis des schrägen Spiegels |
| $w$ | vertikaler Abstand des horizontalen Spiegels vom gemeinsamen Brennpunkt |
| $d_w$ | freier Arbeitsabstand |

**Abb. 4:**

| $d_{mf}$ | Anstand der Faser von der Tubuslinse |
|---|---|
| $d_{tm}$ | Abstand der Tubuslinse von dem Spiegel |
| $d_{ot}$ | Abstand der Tubuslinse von dem Objektiv |
| $x_f$ | Abstand der Fasern voneinander |
| $x_{max}$ | maximale Ausdehnung des beleuchteten Feldes auf dem Spiegel |

Die Abstände $d_{tm}$ und $d_{ot}$, welche die Position der neuen Tubuslinse definieren, beziehen sich auf die Hauptebenen der Linse und nicht auf deren physikalischen Maße.

**Abb. 5:**

| | |
|---|---|
| AOM | Akusto-Optischer Modulator |
| bs | Strahlteiler |
| d*i* | dichroitischer Spiegel |
| fc*i* | Faserkoppler |
| fm*i* | Kippspiegel |
| fw | Filterrad |
| L | Linse |
| m *i* | Spiegel |
| mml | Multimode-Lichtleiterfaser |
| PMT | Photomultiplier Tube |
| pp*i* | polarisationserhaltende Lichtleiterfaser |

**Patentansprüche**

1. Lasermikroskop,

   - mit einer Objektivanordnung, durch die Beleuchtungslicht auf eine zu untersuchende Probe einfällt und die das zu registrierende Probenlicht aufnimmt, wobei die Detektionsrichtung in der Probe relativ zur Beleuchtungsrichtung um einen vorgegebenen Winkel geneigt ist,

     **dadurch gekennzeichnet,**

   - **dass** auf der probenabgewandten Seite der Objektivanordnung ein Schieber vorgesehen ist,
   - **dass** der Schieber eine freie Durchgangsöffnung zur Verwendung des Mikroskops in einer ersten schieberstellung als Laserscanmikroskop aufweist,
   - an den Schieber Lichtleitfasern angekoppelt sind und der Schieber ein Umlenkelement aufweist, welches in einer zweiten Schieberstellung das aus mindestens einer Beleuchtungslichtleitfaser austretende Beleuchtungslicht zu der Objektivanordnung und das aus der Objektivanordnung austretende Probenlicht zu mindestens einer Detektionslichtleitfaser richtet,

2. Mikroskop nach Anspruch 1, **dadurch gekennzeichnet, dass** die Objektivanordnung als Doppelobjektv ausgebildet ist

3. Mikroskop nach Anspruch 1 oder 2, **dadurch gekennzeichnet, dass** für die Theta-Mikroskopie zwei Beleuchtungslichtleitfasern vorgesehen sind, deren Beleuchtungslicht im Fokusbereich interferiert.

4. Mikroskop nach einem der Ansprüche 1 bis 3, **dadurch gekennzeichnet, dass** die Lichtleitfasern piezoelektrisch justierbar sind.

5. Mikroskop nach einem der Ansprüche 1 bis 5, **dadurch gekennzeichnet, dass** die Lichtleitfasern in Schieberichtung ausgerichtet sind und in einer Ebene liegen.

6. Mikroskop nach einem der Ansprüche 1 bis 6, **dadurch gekennzeichnet, dass** die Objektivanordnung, eine Kollimationsoptik und die Lichtleitfasern ein telezentrisches Abbildungssystem bilden.

**EP 1 019 769 B1**

**Claims**

1. Laser microscope

 - having a lens arrangement, through which illumination light is incident upon a sample to be examined and which picks up sample light to be detected, wherein the detection direction in the sample is inclined relative to the illumination direction by a specified angle,

 **characterised in that**

 - the side of the lens arrangement remote from the sample is provided with a slide,
 - the slide comprises a free through-going orifice for using the microscope in a first slide position as a laser scanning microscope,
 - light-conducting fibres are coupled to the slide and the slide comprises a diverting element which in a second slide position directs the illumination light exiting from at least one illumination light-conducting fibre to the lens arrangement and directs the sample light exiting from the lens arrangement to at least one detection light-conducting fibre.

2. Microscope as claimed in claim 1, **characterised in that** the lens arrangement is formed as a dual lens.

3. Microscope as claimed in claim 1 or 2, **characterised in that**, for the purpose of theta microscopy, two illumination light-conducting fibres are provided whose illumination light interferes in the region of focus.

4. Microscope as claimed in any of claims 1 to 3, **characterised in that** the light-conducting fibres can be adjusted piezo-electrically.

5. Microscope as claimed in any of claims 1 to 5, **characterised in that** the light-conducting fibres are aligned in the sliding direction and lie in one plane.

6. Microscope as claimed in any of claims 1 to 6, **characterised in that** the lens arrangement, a collimating lens system and the light-conducting fibres form a telecentric imaging system.


**Revendications**

1. Microscope à laser,

 - avec un agencement d'objectif à travers lequel la lumière d'éclairage est incidente sur un échantillon à examiner et qui reçoit la lumière d'échantillon à enregistrer, où la direction de détection dans l'échantillon est inclinée relativement à la direction d'éclairage selon un angle prédéfini,

 **caractérisé**

 - **en ce qu'**il est prévu sur le côté éloigné de l'échantillon de l'agencement d'objectif un poussoir,
 - **en ce que** le poussoir présente une ouverture traversante libre pour l'utilisation du microscope, dans une première position de poussoir, comme microscope à balayage laser,
 - **en ce que** sont couplées au poussoir des fibres optiques, et le poussoir présente un élément de déviation qui, dans une deuxième position du poussoir, dirige la lumière d'éclairage sortant d'au moins une fibre optique d'éclairage vers l'agencement d'objectif, et la lumière d'échantillon sortant de l'agencement d'objectif vers au moins une fibre optique de détection.

2. Microscope selon la revendication 1, **caractérisé en ce que** l'agencement d'objectif est réalisé comme objectif double.

3. Microscope selon la revendication 1 ou 2, **caractérisé en ce que** pour la microscopie Theta, deux fibres optiques d'éclairage sont prévues dont la lumière d'éclairage interfère dans la zone du foyer.

4. Microscope selon l'une des revendications 1 à 3, **caractérisé en ce que** les fibres optiques sont ajustables d'une manière piezoélectrique.

**5.** Microscope selon l'une des revendications 1 à 4, **caractérisé en ce que** les fibres optiques sont orientées dans la direction de poussée et se situent dans un plan.

**6.** Microscope selon l'une des revendications 1 à 5, **caractérisé en ce que** l'agencement d'objectif, une optique de collimation et les fibres optiques forment un système de représentation télécentrique.

System-PSF

Detektions-PSF

Beleuchtungs-PSF

Überlagerung

*FIG.1*

## FIG. 2

Detektions-optik

Beleuchtungs-optik

Mikroskop-objektiv

C

R2

R1

45°

Theta-Spiegeleinheit

$C_d$

$C_i$

BE

FIG.3

EP 1 019 769 B1

FIG.4

a) Vorderansicht

Okular &
Laserscanning
Optik

Tubuslinse

Reflektorhalter

Faserhalter

Lichtleitfasern

Spiegel   Tubuslinse

$d_{mf}$   $d_{tm}$

y
z

A       B   $d_{ot}$ C   D

piezoelektr.
Verstellelemente

Reflektorschieber

Objektiv

b) Draufsicht

Weitfeld-
Beleuchtungs-
optik

PP-Faser   Faserhalter   $x_{max}$   Spiegel   Reflektorschieber

$x_f$

x
z   $x_f$   A   B   C   D

MM-Faser   piezoelektr.
Verstellelemente

Tubuslinse   Reflektorhalter

14

# FIG. 5